# EUROPÄISCHE PATENTSCHRIFT

(11) **EP 1 637 855 B1**
(45) Veröffentlichungstag und Bekanntmachung des Hinweises auf die Patenterteilung: **27.12.2006**
(21) Anmeldenummer: 05291737.4
(22) Anmeldetag: 17.08.2005
(51) Int. Cl.: G01K 7/16, G01K 7/22, G01K 1/08

(54) **Anordnung zur lokalen Temperaturüberwachung**
Device for local temperature control
Dispositif pour surveiller la température locale

(30) Priorität: 17.09.2004 DE 102004045354
(43) Veröffentlichungstag der Anmeldung: 22.03.2006
(73) Patentinhaber: Nexans, 75008 Paris (FR)
(72) Erfinder: Riedel, Richard, 92685 Floss (DE); Lang, Rainer, 92697 Georgenberg (DE); Huscher, Rainer, 95679 Waldershof (DE); Nachbauer, Otto, 92685 Floss (DE)
(74) Vertreter: Döring, Roger

(56) Entgegenhaltungen:
- EP-A- 1 014 060
- EP-A- 1 037 028
- DE-A1- 2 901 276
- DE-A1- 3 940 032
- US-A- 4 135 381

## Beschreibung

Die Erfindung bezieht sich auf eine Anordnung zur lokalen Überwachung der Temperatur im Bereich von Wärmeerzeugern, bei welcher ein Temperaturfühler über elektrische Leiter an eine Spannungsquelle angeschlossen ist, dessen elektrischer Widerstand temperaturabhängig ist und der in Isoliermaterial eingebettet ist.

Eine derartige Anordnung wird beispielsweise überall dort eingesetzt, wo bei Maschinen und Geräten mit Wärmeerzeugern sichergestellt werden soll, daß an vorgegebenen Stellen keine zu hohen Temperaturen auftreten. Es kann dann gegebenenfalls für eine Kühlung gesorgt werden oder es kann die jeweilige Wärmequelle zumindest kurzfristig außer Betrieb gesetzt werden. In üblicher Technik wird als Temperaturfühler beispielsweise ein auch als Heißleiter bezeichneter NTC-Widerstand (Negative Temperature Coefficient) eingesetzt, der mit zwei elektrischen Leitern bestückt und zur Stromversorgung an eine Steuereinheit angeschlossen ist, die ihrerseits mit einer Spannungsquelle verbunden ist. Der Temperaturfühler - im folgenden kurz als "NTC" bezeichnet - ist zu seinem Schutz in Isoliermaterial eingebettet, beispielsweise in Epoxydharz. Ein NTC ist ein temperaturabhängiger elektrischer Widerstand, dessen Widerstandswert mit steigender Temperatur kleiner wird. Der Widerstandswert kann mittels einer in der Steuereinheit vorhandenen Auswerteelektronik überwacht werden, durch welche gegebenenfalls eine Maßnahme zur Temperaturabsenkung veranlaßt werden kann.

Ein Einsatzgebiet dieser Anordnungen sind beispielsweise Kraftfahrzeuge. Stellen, an denen ein NTC zur Temperaturüberwachung angeordnet werden kann, liegen dann beispielsweise im Bereich des Motors oder an Kompressoren für Luftfederungen oder beim Getriebeöl. Die auf dem Markt erhältlichen und im Einsatz befindlichen Anordnungen mit einem NTC arbeiten grundsätzlich befriedigend. Es kann jedoch geschehen, daß durch äußere elektromagnetische Felder elektrische Spannungen in den Leitern induziert werden, mit denen ein NTC an die Auswerteelektronik angeschlossen ist. Es können dadurch in den Leitern fließende Störströme erzeugt werden, so daß der jeweilige NTC nicht nur durch seine Umgebung, sondern zusätzlich auch elektrisch erwärmt wird. Das Meßergebnis wird dadurch verfälscht, da der Widerstandswert des NTCs auf einen Wert abgesenkt wird, der nicht der Umgebungstemperatur entspricht.

Aus der EP-A-1 037 028 geht ein Sensor zur kombinierten Temperatur- und Füllstandserfassung von elektrisch leitfähigen Medien hervor, der beispielsweise für die Kühlflüssigkeit in Kraftfahrzeugen eingesetzt werden soll. Der Sensor weist ein temperaturempfindliches Sensorelement und ein als Meßelektrode ausgeführtes Sensorelement auf, die beide mit elektrischen Anschlußkontakten ausgerüstet und in einem gemeinsamen Gehäuse mit einem gemeinsamen Kontaktsockel angeordnet sind. Der Anschlußkontakt der Meßelektrode kann zur Auskopplung etwaiger Gleichspannungsanteile einen Kondensator haben. Der Kontaktsockel kann in einer anderen Ausführungsform eine Auswerteelektronik aufweisen, durch welche eventuelle Störgrößen eliminiert werden.

In der US-A-4 135 381 ist ein Sensor zur Feststellung von Temperatur und Sauerstoffgehalt in der Auspuffanlage eines Kraftfahrzeugs beschrieben. Der Sensor ist einerseits an Masse angeschlossen und andererseits über die Reihenschaltung eines Widerstandes und eines Kondensators mit einem Wechselspannungsgenerator sowie mit einem Tiefpaßfilter verbunden. Das Tiefpaßfilter und der Kondensator verhindern eine Beeinflussung des jeweils gemessenen Signals durch die Wechselspannung.

Die DE-A-29 01 276 beschreibt eine Bügeleinrichtung für industrielle Verwendung mit einem der Temperaturregelung dienenden Temperaturfühler, der mit Kompensationswiderständen gekoppelt ist. Die Temperatur der Bügeleinrichtung wird durch eine mit einem Temperaturregler ausgerüsteten Regeleinrichtung geregelt. Der Temperaturregler hat zwei Eingangskreise, die zusammen eine Brückenschaltung bilden. In einer der Eingangsstufen ist ein Verzögerungskondensator angeordnet, durch welchen ein sicheres und rasches Hochheizen erreicht werden soll.

Der Erfindung liegt die Aufgabe zugrunde, die eingangs geschilderte Anordnung so zu gestalten, daß äußere elektromagnetische Felder sich nicht auf das Meßergebnis des NTCs auswirken können.

Diese Aufgabe wird gemäß der Erfindung dadurch gelöst,
- daß elektrisch parallel zu dem NTC ein Kondensator an die Leiter angeschlossen ist und
- daß NTC und Kondensator als einteiliges Bauteil gemeinsam in das Isoliermaterial eingebettet sind.

Durch den gegenüber Wechselströmen als Kurzschluß wirkenden Kondensator ist der NTC vor Strömen geschützt, die durch Induktion auf seinen Leitern erzeugt werden. Seine Gleichstromversorgung aus der Auswerteelektronik bleibt unverändert erhalten. Äußere elektromagnetische Felder können das Meßergebnis also nicht mehr verfälschen. Besonders vorteilhaft bei dieser Anordnung ist die gemeinsame Einbettung von NTC und Kondensator in das Isoliermaterial, wodurch ein einteiliges Bauteil gegeben ist. Bei der Montage dieses durch den Kondensator gegenüber einem NTC allein geringfügig erweiterten Bauteils ergeben sich dementsprechend keine Probleme, da das Bauteil ohne Unterschied in gleicher Weise wie bisher der NTC allein positioniert werden kann. Aus dem einbettenden Isoliermaterial ragen nach wie vor die beiden Leiter heraus, mittels derer das Bauteil an die Auswerteelektronik angeschlossen wird. Dieser wesentliche Vorteil der Anordnung gestattet auch ein Auswechseln eines bisherigen NTC gegen das neue Bauteil ohne Zusatzmaßnahmen.

Ein Ausführungsbeispiel des Erfindungsgegenstandes ist in den Zeichnungen dargestellt.

Es zeigen:
Fig. 1 in schematischer Darstellung eine Vorrichtung mit darin angebrachter Anordnung nach der Erfindung.
Fig. 2 den schaltungstechnischen Aufbau der Anordnung.
Fig. 3 die Anordnung in räumlicher Ausführung in vergrößerter Darstellung.

Der in der Anordnung verwendete Temperaturfühler wird im folgenden weiter als "NTC" bezeichnet. Es sollen damit alle im Sinne der Erfindung verwendbaren Temperaturfühler ebenfalls erfaßt sein. Als spezielles Einsatzgebiet werden außerdem - stellvertretend für alle anderen möglichen Einsatzgebiete - Kraftfahrzeuge erwähnt.

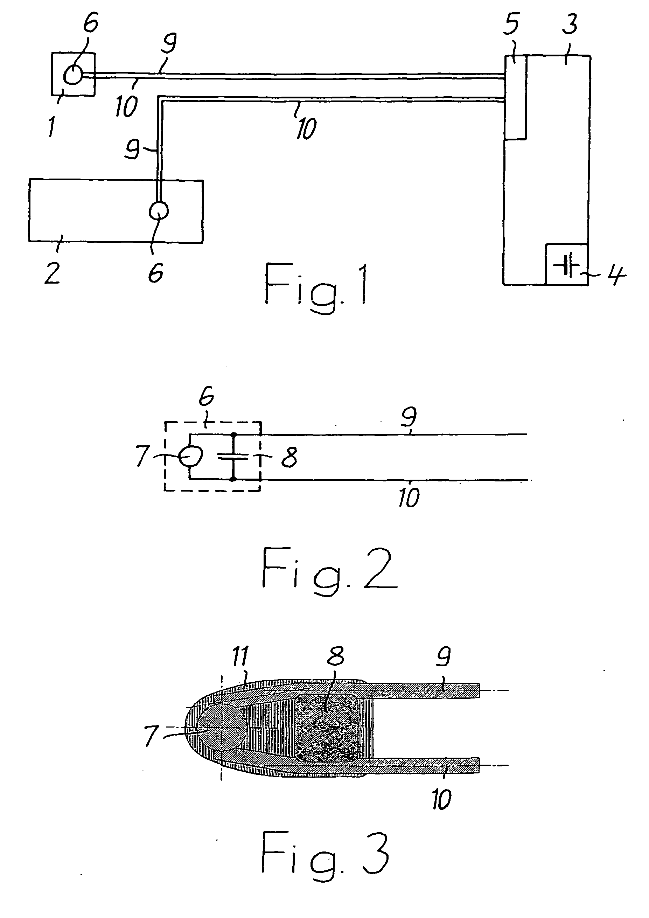

In Fig. 1 sind Teile eines Kraftfahrzeugs schematisch durch Kästchen angedeutet, beispielsweise ein Kompressor 1 für eine Luftfederung und ein Motor 2. Das Fahrzeug hat außerdem eine Steuereinheit 3, welche an eine Spannungsquelle 4 angeschlossen ist, bei welcher es sich in der Regel um die Batterie des Kraftfahrzeugs handelt. In der Steuereinheit 3 ist eine Auswertelektronik 5 angeordnet.

Sowohl im Bereich des Kompressors 1 als auch im Bereich des Motors 2 ist zur Temperaturüberwachung mindestens ein Bauteil 6 positioniert, das einen NTC 7 und einen Kondensator 8 umfaßt (Fig. 2 und 3). Jedes Bauteil 6 ist über zwei elektrische Leiter 9 und 10 mit der Auswerteelektronik 5 verbunden. Der Kondensator 8 ist gemäß Fig. 2 elektrisch parallel zum NTC 7 geschaltet. In den Leitern 9 und 10 fließende Wechselströme, die durch äußere elektromagnetische Felder verursacht werden, beeinflussen den NTC 7 nicht. Sie werden vom Kondensator 8 kurzgeschlossen.

NTC 7 und Kondensator 8 sind räumlich so nahe wie möglich nebeneinander angeordnet und in Isoliermaterial 11 eingebettet. Ein solches Isoliermaterial ist beispielsweise Epoxydharz, das auch gut wärmeleitend ist. Das Isoliermaterial 11 gibt der Einheit 6 eine ausreichende mechanische Stabilität und es schützt den NTC 7 und den Kondensator 8 auch vor mechanischen Belastungen. Das Bauteil 6 kann zusätzlich noch mit einem Silikonlack überzogen sein. Es kann als einfach zu handhabendes Einzelteil an seinem jeweiligen Einsatzort montiert werden. Nach seiner Montage wird das Bauteil 6 jeweils mit seinen Leitern 9 und 10 mit der Auswerteelektronik 5 verbunden.

## Patentansprüche

1. Anordnung zur lokalen Überwachung der Temperatur im Bereich von Wärmeerzeugern, bei welcher ein Temperaturfühler über elektrische Leiter an eine Spannungsquelle angeschlossen ist, dessen elektrischer Widerstand temperaturabhängig ist und der in Isoliermaterial eingebettet ist, **dadurch gekennzeichnet,**
- **daß** elektrisch parallel zu dem Temperaturfühler (7) ein Kondensator (8) an die Leiter (9,10) angeschlossen ist und
- **daß** Temperaturfühler (7) und Kondensator (8) als einteiliges Bauteil (6) gemeinsam in das Isoliermaterial (11) eingebettet sind.

## Claims

1. Arrangement for locally monitoring the temperature in the region of heat generators, in which arrangement a temperature sensor is connected to a voltage source via electrical conductors, the electrical resistance of said temperature sensor is temperature-dependent, and said temperature sensor is embedded in insulating material, **characterized in**
- **that** a capacitor (8) is connected to the conductors (9, 10) electrically in parallel with the temperature sensor (7), and
- **that** the temperature sensor (7) and capacitor (8) are jointly embedded in the insulating material (11) as an integral component (6).

## Revendications

1. Dispositif pour surveiller localement la température dans la région de générateurs de chaleur, dans lequel un palpeur de température est raccordé par le biais de conducteurs électriques à une source de tension, et dont la résistance électrique dépend de la température et est noyé dans le matériau isolant, **caractérisé en ce**
- **qu'**un condensateur (8) est raccordé électriquement aux conducteurs (9, 10) en parallèle avec le palpeur de température (7), et
- **que** le palpeur de température (7) et le condensateur (8) sont noyés conjointement sous forme d'un composant d'une seule pièce (6) dans le matériau isolant (11).
